# EUROPÄISCHE PATENTSCHRIFT

(11) **EP 0 984 302 B1**
(45) Veröffentlichungstag und Bekanntmachung des Hinweises auf die Patenterteilung: **20.08.2003**
(21) Anmeldenummer: 99113102.0
(22) Anmeldetag: 07.07.1999
(51) Int. Cl.: G01V 5/00

(54) **Verfahren und Vorrichtung zur Prüfung von Reisegepäck durch Röngtendurchleuchtung**
Method and apparatus for X-ray examination of luggage
Dispositif et appareil d'analyse de bagage aux rayons X

(30) Priorität: 04.09.1998 EP 98116760
(43) Veröffentlichungstag der Anmeldung: 08.03.2000
(73) Patentinhaber: YXLON International X-Ray GmbH, 22419 Hamburg (DE)
(72) Erfinder: Martens, Gerhard Dr., 24558 Henstedt-Ulzburg (DE); Peemöller, Horst, 22179 Hamburg (DE); Geistmann, Bernd, 25421 Pinneberg (DE); Dau, Hans-Detlef, 22339 Hamburg (DE)
(74) Vertreter: Schnekenbühl, Robert Matthias L.

(56) Entgegenhaltungen:
- EP-A- 0 311 177
- US-A- 3 790 799
- US-A- 4 618 772

## Beschreibung

Die Erfindung betrifft ein Verfahren und eine Vorrichtung nach dem Oberbegriff der Ansprüche 1 und 2 bzw. 4 und 5.

Derartige Vorrichtungen sind in den unterschiedlichsten Ausgestaltungen bekannt. Sie dienen der automatischen Prüfung von Reisegepäck, insbesondere auf Flughäfen. Zu diesem Zweck sind sie in das Gepäckfluß- und -abwicklungssystem des jeweiligen Flughafens integriert. Hieraus ergeben sich grundsätzliche Rahmenbedingungen hinsichtlich Abmessungen und Prüfgeschwindigkeiten.

Bei dem in Verbindung mit der Erfindung eingesetzten Röntgendurchleuchtungsverfahren werden die Röntgenstrahlen, die von einer Röntgenröhre ausgehen, von dem durchleuchteten Gepäckstückinhalt gestreut. Dieses Streusignal wird von einem Detektor aufgefangen und von einer nachgeschalteten Elektronik berechnet. Das gemessene Spektrum ist eine Anzeige für die in dem Gepäckstück befindliche Substanz. Das Meßsignal wird mit den in einer Datenbank abgespeicherten Signalen verglichen. Bei einer Übereinstimmung erfolgt eine Alarmmeldung.

Es gibt nun grundsätzlich verschiedene Möglichkeiten, um das Gepäckstück vollständig abzutasten. In der Praxis kann pro Durchleuchtungsvorgang ein ungefähr 5 cm bereiter Streifen abgescannt werden. Dieses bedeutet bei einem entsprechend großen Gepäckstück, dass ein Gesamtbild durch eine Vielzahl von einzeln abgescannten Streifen entsteht. Hierfür ist eine entsprechende Zeit erforderlich.

Das Gepäckstück wird auf dem Förderband bewegt. Bei einer feststehenden Röntgen/Detektoreinheit muss das Gepäckstück relativ zu dem Scanner, beispielsweise mäanderförmig, zwischen Röntgenröhre und Detektor bewegt werden, um ein Abscannen mit den notwendigen Streifeneinheiten durchzuführen. Hierzu muss die eigentliche Transporteinrichtung und Bewegung des Gepäckstückes unterbrochen und geändert werden. Dieses ist bei Reisegepäck auf Flughäfen nicht hinnehmbar, da jedes einzelne Gepäckstück, außer in Transportrichtung, auch noch hin- und herbewegt werden müsste.

Eine Vorrichtung zur Untersuchung eines Gepäckstückes mittels Röntgenstrahlung ist aus der WO 97/12229 bekannt. Hierbei wird ein Gepäckstück auf einen Tisch gefördert, der in horizontaler Richtung anhebbar und absenkbar ist. Um den Tisch herum ist an einem C-Arm eine Röntgen-Scannvorrichtung mit einer Röntgenquelle am einen Ende des C-Arms und einem Detektor am anderen Ende des C-Arms angeordnet. Die Untersuchung des Gepäckstückes erfolgt stufenweise, wobei der C-Arm um eine parallel zur Bewegungsrichtung des Gepäckstückes geschwenkt werden kann. Damit wird das Gepäckstück auf einer komplizierten Bahn durch den Scanner umfahren. Um eine optimale Untersuchung des Gepäckstückes zu erreichen, ist je nach Schwenkungswinkel des C-Arms ein Absenken bzw. Anheben des Tischs nötig, auf dem sich das Gepäckstück befindet. Zur vollständigen Untersuchung des Gepäckstückes erfolgt ein getaktetes Vorrücken desselben auf dem Tisch. Ein solches Verfahren ist zum einen sehr zeitintensiv und zum anderen auch hinsichtlich des zu betreibenden konstruktiven Aufwands sehr kompliziert.

Darüber hinaus ist aus der EP 0 825 457 A2 eine Vorrichtung zur Untersuchung von Gepäckstücken mittels Röntgenstrahlung bekannt, bei der ebenfalls ein Scanner um ein zu untersuchendes Gepäckstück herum rotiert wird. Auch hier ist die Schwenkachse in Richtung der Bewegung des Gepäckstückes ausgerichtet. Die Scannvorrichtung umfährt auf einem vollständigen Kreis das Gepäckstück. Das überdeckte Beobachtungsfeld wird in Abhängigkeit von einer getakteten Vorwärtsbewegung des Gepäckstücks verschoben. Dadurch wird in sehr aufwendiger Weise ein Computertomogramm erzeugt. Auch diese Vorrichtung ist äußerst kostenintensiv aufgrund des aufwendigen konstruktiven Aufbaus.

Der Erfindung liegt die Aufgabe zugrunde, ein Verfahren und eine Vorrichtung der eingangs genannten Art zu schaffen, die die Anforderungen hinsichtlich Prüfgeschwindigkeit und Prüfgenauigkeit erfüllt, ohne den Gesamtgepäckfluss in unakzeptabler Weise zu stören und gleichzeitig einen möglichst kompakten Aufbau der gesamten Vorrichtung erlaubt.

Diese Aufgabe wird bei den erfindungsgemäßen Verfahren durch die Kennzeichen der Ansprüche 1 und 2 bzw. bei den entsprechenden Vorrichtungen durch die Kennzeichen der Ansprüche 4 und 5 gelöst.

Erfindungsgemäß wird nicht das Gepäckstück während des Scannvorgangs, sondern der Scanner mit der Röntgen/Detektoreinheit über das stillstehende Gepäckstück bewegt. Hierdurch wird bei jeder Bewegung, also bei einer Hin- und auch bei einer Rückbewegung des Scanners, ein Streifen des Gepäckstückes erfasst. Dieser Vorgang wird in Abhängigkeit von der Größe des Gepäckstückes entsprechend häufig wiederholt, so daß die Streifen zu einem Gesamtbild des Gepäckstückes wieder zusammengesetzt werden können. Die Stillstandszeiten des Gepäckstückes sind sehr kurz, da der Scanner sehr schnell und sehr genau über das Gepäckstück bewegt werden kann.

Grundsätzlich kann entweder eine gerade Bewegung des Scanners im wesentlichen senkrecht zur Transportrichtung des Gepäckstückes erfolgen oder es wird eine Schwenkbewegung scheibenwischerartig oder kreisbogenförmig durchgeführt. Die letztere Bewegungsart hat den Vorteil, daß die Vorrichtung sehr schmal aufgebaut werden kann. Die Schwenkachse liegt entweder seitlich neben dem Transportband oder sie geht durch die Mitte des Transportbandes. In besonders vorteilhafter Weise ist die Durchleuchtungsachse, d.h. die Achse zwischen Röntgen- und Detektoreinheit, zur Transportebene des Förderbandes geneigt, und zwar vorteilhafterweise sowohl quer als auch in Transportrichtung. Hierdurch ist es möglich, auch dünne Gegenstände in dem Gepäckstück, die senkrecht oder genau waagerecht zur Transportrichtung angeordnet sind, um möglichst ein Erkennen zu verhindern, zu erfassen. Dieses kann in unterschiedlicher Weise geschehen, beispielsweise durch Neigen des Schlittens und durch entsprechende Schrägstellung des Scanners oder durch Neigung der Schwenkachse je nach dem, welches Verfahren ausgewählt, und welche Vorrichtung eingesetzt wird.

Bei jeder Bewegung, d.h. bei jeder Hin- und bei jeder Rückbewegung des Scanners über das Gepäckstück wird ein Scannvorgang durchgeführt, um möglichst schnell und rationell zu arbeiten (Anspruch 3).

Im folgenden wird die Erfindung unter Hinweis auf die Zeichnung anhand zweier Ausführungsbeispiele näher erläutert.

Es zeigt:
- Fig. 1: eine schematische, perspektivische Ansicht der wesentlichen Teile einer Vorrichtung einer ersten Ausführungsform zur Durchführung des erfindungsgemäßen Verfahrens;
- Fig. 2: eine schematische Draufsicht auf die Darstellung der Fig. 1;
- Fig. 3: eine perspektivische Ansicht auf eine Vorrichtung einer zweiten Ausführungsform nach der Erfindung;
- Fig. 4: einen Querschnitt durch die Darstellung der Fig. 3; und
- Fig. 5: einen Längsschnitt durch die Darstellung der Fig. 3.

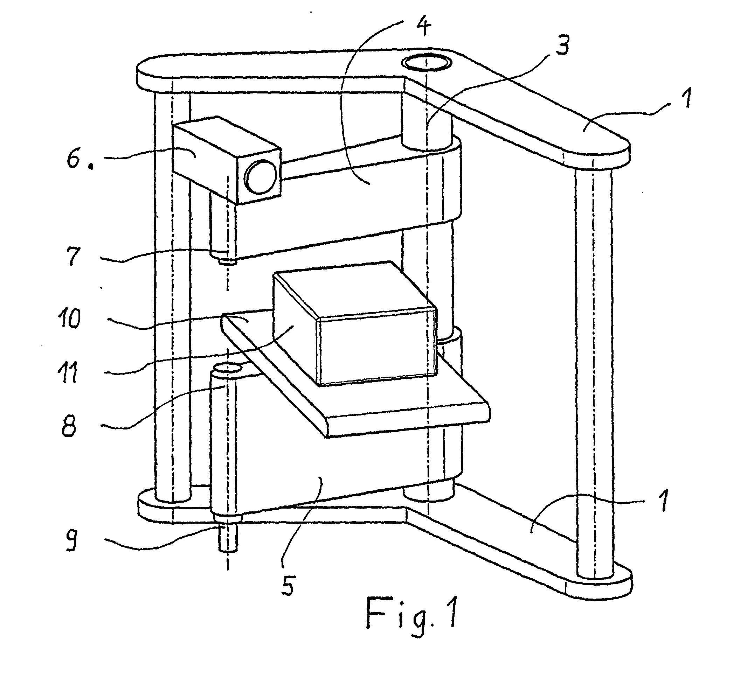

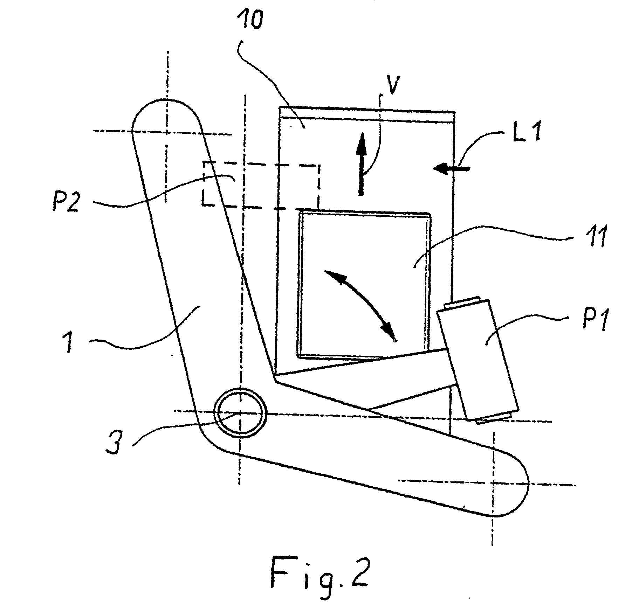

In den Fig. 1 und 2 ist eine erste Ausführungsform mit einer seitlich neben dem Transportband liegenden Schwenkachse für den Scanner dargestellt.

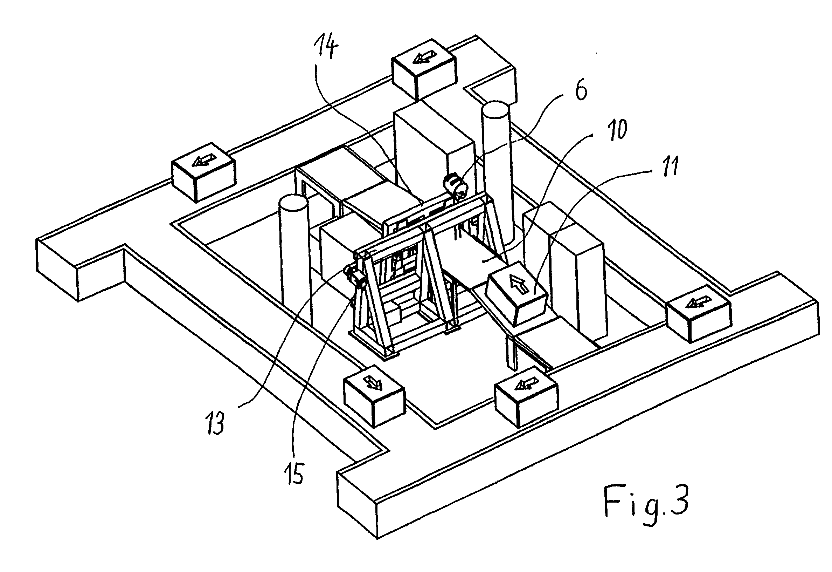

In den Fig. 3 bis 5 ist eine Ausführungsform dargestellt, bei der der Scanner an einem Schlitten quer zur Transportrichtung über das zu durchleuchtende Gepäckstück bewegt wird.

Gleiche Teile sind mit gleichen Bezugszeichen bezeichnet. In den Fig. 1 und 2, die die erste Ausführungsform zeigen, ist ein Transportband 10 schematisch dargestellt. Ein Gepäckstück ist mit 11 bezeichnet. Auf dem endlosen Transportband werden kontinuierlich eine entsprechende Vielzahl von Gepäckstücken in die Vorrichtung bewegt.

Eine abgewinkelte Rahmenkonstruktion 1 bildet die Lagerung für den Scanner und sorgt für die notwendige Stabilität.

Der Scanner besteht aus einer Röntgeneinheit 4 und einer Detektoreinheit 5. Die über dem Förderband und dem Gepäckstück 11 angeordnete Röntgeneinheit 4 besteht aus einer Röntgenröhre 6 und einem Primärkollimator 7. Unterhalb des Förderbandes 10 befindet sich der Sekundärkollimator 8 und der Detektor 9. Der durch die Röntgeneinheit 4 und die Detektoreinheit 5 gebildete Scanner ist um die Mittelachse 3 der Rahmenkonstruktion 1 schwenkbar. Die Mittelachse 3 verläuft senkrecht zu der Ebene des Förderbandes 10.

Beim Zufördern des Gepäckstückes befindet sich der Scanner in einer Startposition, die in Fig. 2 mit P1 bezeichnet ist. Das zu prüfende Gepäckstück 11 wird dann solange eingefördert, bis der Vortrieb V durch ein Signal einer Lichtschranke L1 gestoppt wird. Danach wird die Scannbewegung, d.h. die Schwenkbewegung nach Art eines Scheibenwischers über das Gepäckstück, gestartet. Der Scanner wird von der Position 1 in die Position 2 gebracht. Bei diesem Vorgang wird ein etwa 5 cm breiter Streifen abgescannt.

Nach Erreichen der Position P2 erfolgt eine erneute Vorwärtsbewegung V des Transportbandes 10 um 5 cm. Daraufhin wird wieder ein neuer Scannvorgang ausgeführt, und zwar von P2 nach P1. In diesem Zyklus wird das gesamte Gepäckstück abgescannt und überprüft. Ein Rechner wertet die entsprechenden Signale aus.

In den Fig. 1 und 2 ist die Schwenkachse 3 senkrecht dargestellt, d.h. sie steht senkrecht auf der Ebene des Transportbandes 10. Wenn die Schwenkachse 3 zur Transportebene des Transportbandes 10 geneigt ist, dann können auch solche dünnen oder flachen Gegenstände in dem Gepäckstück 11 erfaßt werden, die senkrecht oder waagerecht zur Transportebene verlaufen.

Bei einer abgewandelten Ausführungsform, die nicht gezeichnet ist, wird ein Rahmen verwendet, durch den das Transportband 10 hindurch bewegt wird. Die Schwenkachse liegt bei dieser abgewandelten Ausführungsform ungefähr in der Mitte der Transportebene, d.h. die Welle, die den Scanner trägt, ist unterbrochen, damit das Transportband hier hindurchbewegt werden kann. Bei dieser abgewandelten Ausführungsform führt der Scanner eine symmetrische, kreisbogenförmige Bewegung im Verhältnis zu der Transportebene durch, d.h. der Mittelpunkt der Schwenkbewegung liegt auf der Mittelachse des Transportbandes. Diese Ausführungsform ist, wie gesagt, nicht dargestellt.

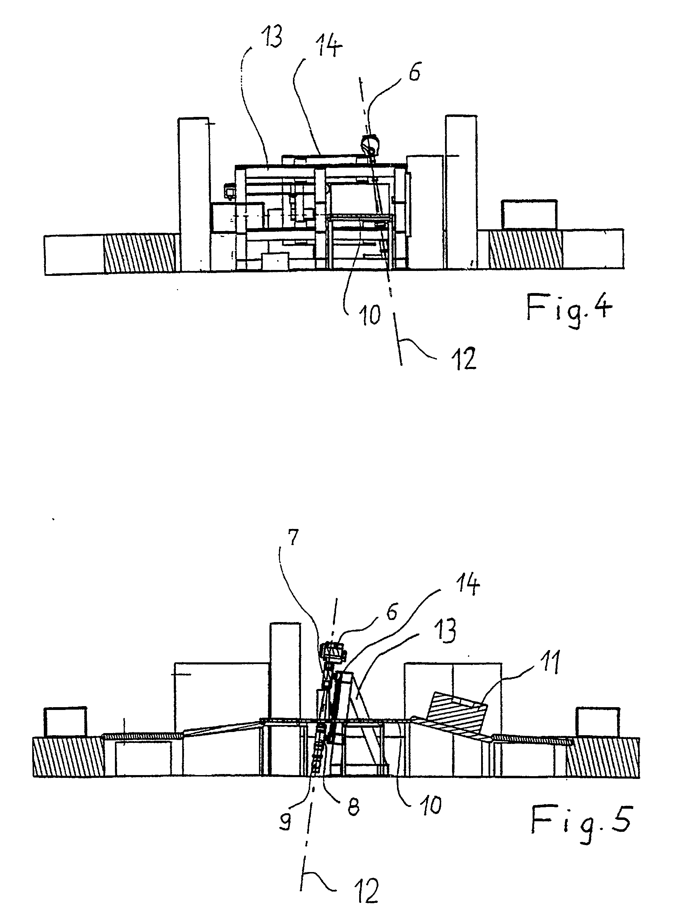

Bei der Ausführungsform nach den Figuren 3 bis 5 ist ein ortsfestes, räumliches Gestell 13 vorgesehen, an dem ein Schlitten 14 quer zur Transportrichtung des Förderbandes 10 und damit der Bewegungsrichtung der Gepäckstücke 11 hin- und herbewegbar ist. An dem Schlitten 14 ist der Scanner befestigt. Die Röntgenröhre 6 und der Primärkollimator 7 sowie der Sekundärkollimator 8 und der Detektor 9 sind in Fig. 5 erkennbar.

Es ist auch erkennbar, daß die Ebene des Gestells 13 , in der der Schlitten 14 bewegbar ist, d.h. die Bewegungsebene des Schlittens senkrecht zur Transportebene des Transportbandes 10, schräg gestellt ist. Eine entsprechende Schrägstellung in der anderen Ebene nach Fig. 4 ist ebenfalls erkennbar. Durch diese Neigung der Durchleuchtungsachse 12, die durch die Röntgeneinheit und die Detektoreinheit geht, wird sichergestellt, daß auch dünne Gegenstände in dem Gepäckstück 11 erfaßt werden, die senkrecht oder waagerecht zur Transportebene angeordnet sind. Der Antriebsmotor für den Schlitten 14 ist mit 15 bezeichnet.

Im übrigen arbeitet die Vorrichtung nach den Fig. 3 bis 5 so wie vorstehend in Verbindung mit der Ausführungsform nach den Fig. 1 und 2 beschrieben. Bei einer Bewegung des Scanners über das dann stillstehende Gepäckstück 11 wird ein Streifen festgehalten. Bevor die Rückbewegung des Scanners beginnt, wird das Gepäckstück entsprechend weiterbewegt. Die auf diese Weise erzeugten einzelnen Streifen werden dann zu einem Gesamtbild des Inhaltes des Gepäckstückes zusammengesetzt.

## Patentansprüche

1. Verfahren zum Prüfen von Reisegepäck durch Röntgendurchleuchtung, bei dem das zu prüfende Gepäckstück (11) auf einem Transportband (10) in einen die Röntgenkomponenten (6 bis 9), Röntgeneinheit und Detektoreinheit, enthaltenden Scanner bewegt wird, **dadurch gekennzeichnet, dass** der Scanner bei stillstehendem Gepäckstück (11) zur Durchführung eines Scannvorganges linear und im wesentlichen senkrecht zur Transportrichtung des Gepäckstückes (11) über dieses bewegt wird, und dass dieser Vorgang nach getaktetem Vorrücken des Gepäckstückes (11) in Abhängigkeit von der Größe (Länge) des Gepäckstückes (11) wiederholt wird.

2. Verfahren zum Prüfen von Reisegepäck durch Röntgendurchleuchtung, bei dem das zu prüfende Gepäckstück (11) auf einem Transportband (10) in einen die Röntgenkomponenten, Röntgeneinheit (4) und Detektoreinheit (5), enthaltenen Scanner bewegt wird, **dadurch gekennzeichnet, dass** der Scanner bei stillstehendem Gepäckstück (11) zur Durchführung eines Scannvorganges nach Art eines Scheibenwischers kreisbogenförmig über das Gepäckstück (11) um eine im Wesentlichen senkrecht zum Transportband (10) angeordnete Schwenkachse (3) geschwenkt wird, und dass dieser Vorgang nach getaktetem Vorrücken des Gepäckstückes in Abhängigkeit von der Größe (Länge) des Gepäckstückes (11) wiederholt wird.

3. Verfahren nach Anspruch 1 oder 2, **dadurch gekennzeichnet, dass** sowohl bei der Hinbewegung des Scanners aus der Ausgangsstellung als auch bei seiner Rückbewegung, ein Scannvorgang durchgeführt wird, wobei das Gepäckstück (11) zwischen beiden Scannvorgängen entsprechend vorgerückt wird.

4. Vorrichtung zum Prüfen von Reisegepäck durch Röntgendurchleuchtung mit einem das zu prüfende Gepäckstück (11) in einen die Röntgenkomponenten (6 bis 9), Röntgeneinheit und Detektoreinheit, enthaltenden Scanner bewegende Transportband (10), **dadurch gekennzeichnet, dass** der Scanner an einem Schlitten (14) linear und im wesentlichen senkrecht zur Transportrichtung des Gepäckstückes (11) über dieses bewegbar ist, und dass eine Einrichtung vorgesehen ist, die die Bewegung des Transportbandes (19) mit dem Gepäckstück (11) beim Start des Scannvorganges unterbricht, und entsprechende Wiederholungen des Scannvorganges in Abhängigkeit von der Größe (Länge) des Gepäckstückes (11) taktet.

5. Vorrichtung zum Prüfen von Reisegepäck durch Röntgendurchleuchtung mit einem das zu prüfende Gepäckstück (11) in einen die Röntgenkomponenten, Röntgeneinheit (4) und Detektoreinheit (5), enthaltenden Scanner bewegende Transportband (10), **dadurch gekennzeichnet, dass** der Scanner um eine zur Transportebene senkrechte Achse (3) derart schwenkbar ist, dass er zur Durchführung eines Scannvorganges eine kreisförmige Schwenkbewegung nach Art eines Scheibenwischers über das Gepäckstück (11) ausführt, und dass eine Einrichtung vorgesehen ist, die die Bewegung des Transportbandes (10) mit dem Gepäckstück (11) bei Start des Scannvorganges unterbricht, und entsprechende Wiederholungen des Scannvorganges in Abhängigkeit von der Größe (Länge) des Gepäckstückes (11) taktet.

6. Vorrichtung nach Anspruch 4 oder 5, **dadurch gekennzeichnet, dass** die Durchleuchtungsachse des Scanners zwischen Röntgeneinheit (4, 6, 7) und Detektoreinheit (5, 8, 9) zur Senkrechten geneigt ist.

7. Vorrichtung nach Anspruch 5 oder 6, **dadurch gekennzeichnet, dass** die Schwenkachse (3) des durch die Röntgeneinheit (4) und Detektoreinheit (5) gebildeten Scanners zur Senkrechten geneigt ist.

8. Vorrichtung nach Anspruch 4 oder 6, **dadurch gekennzeichnet, dass** die Röntgeneinheit (6, 7) und die Detektoreinheit (8, 9) derart an dem Schlitten (14) befestigt sind, dass die Durchleuchtungsachse des Scanners zur Ebene des Transportbandes (10) geneigt ist.

9. Vorrichtung nach Anspruch 5, 6 oder 7, **dadurch gekennzeichnet, dass** der Scanner an einer abgewinkelten Rahmenkonstruktion (1) gelagert ist, wobei die Schwenkachse (3) die Mittelachse der Rahmenkonstruktion bildet.

10. Vorrichtung nach Anspruch 9, **dadurch gekennzeichnet, dass** die Schwenkachse (3) ungefähr durch die Mitte des Transportbandes (10) verläuft.

## Claims

1. A method for examining luggage using x-ray scanning, in which the luggage piece (11) to be examined is transported on a conveyor belt (10) into a scanner containing x-ray components (6 through 9), an x-ray unit and a detector unit,
wherein, for carrying out a scanning procedure, the scanner, the luggage piece (11) being motionless, is moved over the latter in linear fashion and so as to be essentially perpendicular to the transport direction of the luggage piece (11), and, after a timed advance of the luggage piece (11), this procedure is repeated as a function of the size (length) of the luggage piece (11).

2. The method for examining luggage using x-ray scanning, in which the luggage piece (11) to be examined is transported on a conveyor belt (10) into a scanner containing x-ray components (6 through 9), the x-ray unit (4) and the detector unit (5),
wherein, for carrying out a scanning procedure, the scanner, the luggage piece (11) being motionless, is swiveled like a windshield wiper in a circular-arc fashion over the luggage piece (11) about a swivel axis (3) that is disposed so as to be essentially perpendicular to the conveyor belt (10), and this procedure, after a timed advance of the luggage piece, is repeated as a function of the size (length) of the luggage piece (11).

3. The method as recited in Claim 1 or 2,
wherein a scanning procedure is carried out both in response to the forward motion of the scanner from the starting position as well as in response to the reverse motion, the luggage piece (11) being advanced between the two scanning procedures accordingly.

4. A device for examining luggage using x-ray scanning having a conveyor belt (10) that moves the luggage piece (11) to be examined into a scanner containing x-ray components (6 through 9), an x-ray unit and a detector unit,
wherein the scanner can be moved over the luggage piece on a carriage (14) in linear fashion and so as to be essentially perpendicular to the transport direction of the luggage piece (11), and a device is provided, which interrupts the motion of the conveyor belt (10) having the luggage piece (11) in response to the start of the scanning procedure, and which synchronizes corresponding repetitions of the scanning procedure as a function of the size (length) of the luggage piece (11).

5. A device for examining luggage using x-ray scanning, having a conveyor belt (10) that moves the luggage piece (11) to be examined into a scanner containing x-ray components, the x-ray unit (4) and the detector unit (5),
wherein the scanner can be swiveled about an axis (3) that is perpendicular with respect to the transport plane such that, for carrying out a scanning procedure, the scanner describes over the luggage piece (11) an arc-shaped swivel motion like a windshield wiper, and a device is provided, which interrupts the motion of the conveyor belt (10) having the luggage piece (11) in response to the start of the scanning procedure, and which synchronizes the corresponding repetitions of the scanning procedure as a function of the size (length) of the luggage piece (11).

6. The device as recited in Claim 4 or 5,
wherein the scanning axis of the scanner between the x-ray unit (4, 6, 7) and the detector unit (5, 8, 9) is tilted with respect to the perpendicular.

7. The device as recited in Claim 5 or 6,
wherein the swivel axis (3) of the scanner, made up of the x-ray unit (4) and the detector unit (5), is tilted with respect to the perpendicular.

8. The device as recited in Claim 4 or 6,
wherein the x-ray unit (6, 7) and the detector unit (8, 9) are mounted on the carriage (14) such that the scanning axis of the scanner is tilted with respect to the plane of the conveyor belt (10).

9. The device as recited in Claim 5, 6, or 7,
wherein the scanner is supported on an angle-shaped frame construction (1), the swivel axis (3) constituting the central axis of the frame construction.

10. The device as recited in Claim 9,
wherein the swivel axis (3) runs approximately through the center of the conveyor belt (10).

## Revendications

1. Procédé pour vérifier des bagages au moyen d'une radioscopie, dans lequel on déplace le bagage (11) sur une bande de transport (10) dans un scanner comportant les composants de radioscopie (6 à 9), l'unité de radioscopie et l'unité de détection, **caractérisé en ce que** le scanner est déplacé de façon linéaire et essentiellement perpendiculaire au dessus dudit bagage par rapport à la direction de transport pour effectuer une procédure de scannage lorsque le bagage (11) reste immobile et **en ce que** cette procédure de scannage est répétée selon un avancement cadencé du bagage (11) en fonction de la taille (longueur) du bagage (11).

2. Procédé pour vérifier des bagages au moyen d'une radioscopie , dans lequel on déplace le bagage (11) sur une bande de transport (10) dans un scanner comportant les composants de radioscopie (6 à 9), l'unité de radioscopie et l'unité de détection , **caractérisé en ce que** le scanner est pivoté pour effectuer la procédure de scannage de façon circulaire à la manière d'une lave-glace autour d'un axe de pivotement (3) disposé essentiellement perpendiculairement par rapport à la bande de transport (10) pour un bagage immobile (11) et **en ce que** cette procédure de scannage est répétée selon un avancement cadencé du bagage (11) en fonction de la taille (longueur) du bagage (11).

3. Procédé selon la revendication 1 ou 2, **caractérisé en ce qu'**une procédure de scannage est effectuée aussi bien au cours de l'avancement du scanner à partir de la position de départ que pendant le mouvement de retour; le bagage (11) étant avancé de façon correspondante entre les deux procédures de scannage.

4. Dispositif pour vérifier des bagages au moyen d'une radioscopie avec une bande de transport (10) déplaçant le bagage (11) à vérifier dans un scanner comportant les composants de radioscopie (6 à 9), l'unité de radioscopie et l'unité de détection , **caractérisé en ce que** le scanner est déplacé au dessus du bagage sur un chariot (14) de façon linéaire et essentiellement perpendiculaire par rapport à la direction de transport du bagage, et **en ce qu'**un dispositif est prévu, lequel interrompt au démarrage de la procédure de scannage, le mouvement de la bande de transport (19) avec le bagage et synchronise des répétitions correspondantes de la procédure de scannage en fonction de la taille (longueur) du bagage .

5. Dispositif pour vérifier des bagages au moyen d'une radioscopie avec une bande de transport (10) déplaçant le bagage (11) à vérifier dans un scanner comportant les composants de radioscopie (6 à 9), l'unité de radioscopie et l'unité de détection , **caractérisé en ce que** le scanner peut être pivoté autour d'un axe (3) perpendiculaire par rapport au plan de transport de manière à effectuer au dessus du bagage un mouvement de pivotement circulaire de lave-glace pour effectuer une procédure de scannage, et **en ce qu'**un dispositif est prévu, lequel interrompt au démarrage de la procédure de scannage le mouvement de la bande de transport (19) avec le bagage et synchronise des répétitions correspondantes de la procédure de scannage en fonction de la taille (longueur) du bagage.

6. Dispositif selon la revendication 4 ou 5, **caractérisé en ce que** l'axe de radioscopie du scanner est incliné par rapport à la perpendiculaire entre l'unité de radioscopie (4, 6, 7) et l'unité de détection (5, 8, 9).

7. Dispositif selon la revendication 5 ou 6, **caractérisé en ce que** l'axe de pivotement (3) du scanner formé par l'unité de radioscopie (4) et l'unité de détection (5) est incliné par rapport à la perpendiculaire.

8. Dispositif selon la revendication 4 ou 6, **caractérisé en ce que** l'unité de radioscopie (6, 7) et l'unité de détection (8, 9) sont fixées sur le chariot (14) de sorte que l'axe de radioscopie du scanner soit incliné par rapport au plan de la bande de transport (10).

9. Dispositif selon la revendication 5, 6 ou 7, **caractérisé en ce que** le scanner est logé sur une construction de cadre en angle (1) ; l'axe de pivotement (3) formant l'axe médian de la construction de cadre.

10. Dispositif selon la revendication 9, **caractérisé en ce que** l'axe de pivotement (3) s'étend à peu près à travers le milieu de la bande de transport (10).
